# EUROPEAN PATENT APPLICATION

(11) **EP 3 570 449 A1**
(43) Date of publication of application: **20.11.2019**
(21) Application number: 18172367.7
(22) Date of filing: 15.05.2018
(51) Int. Cl.: H04B 5/00, G06F 13/38

(54) **MULTI-MODE NFC CONTROLLER**

(71) Applicant: Panthronics AG, 8041 Graz (AT)
(72) Inventor: Kersch-Koncar, Gerald, 8152 Stallhofen (AT); Pieber, Michael, 8062 Kumberg (AT)
(74) Representative: Röggla, Harald

(57) **Abstract**

A system (15) of an antenna (27) connected to a controller circuit (17) that communicates information with a device host (16) of the system (15) over a contact host interface (18, 22.1, 22.2) to transmit and receive information over a contactless interface (28) of the antenna (27), which the controller circuit (17) comprises a controller processor (24) and a hardware I/O controller (30), which are connected to a front-end module (26) of the controller circuit (17) to transmit/receive processed information to/from the antenna (27) and , which controller processor (24) is powered in a first mode of the controller circuit (17) to process the information and which hardware I/O controller (30) processes the information in a second mode of the controller circuit (17), when the power of the controller processor (24) is low or down.

## Description

### FIELD OF THE INVENTION

The present invention relates to a system of an antenna connected to a controller circuit that communicates information with a device host of the system over a contact host interface to transmit and receive information over a contactless interface of the antenna.

### BACKGROUND OF THE INVENTION

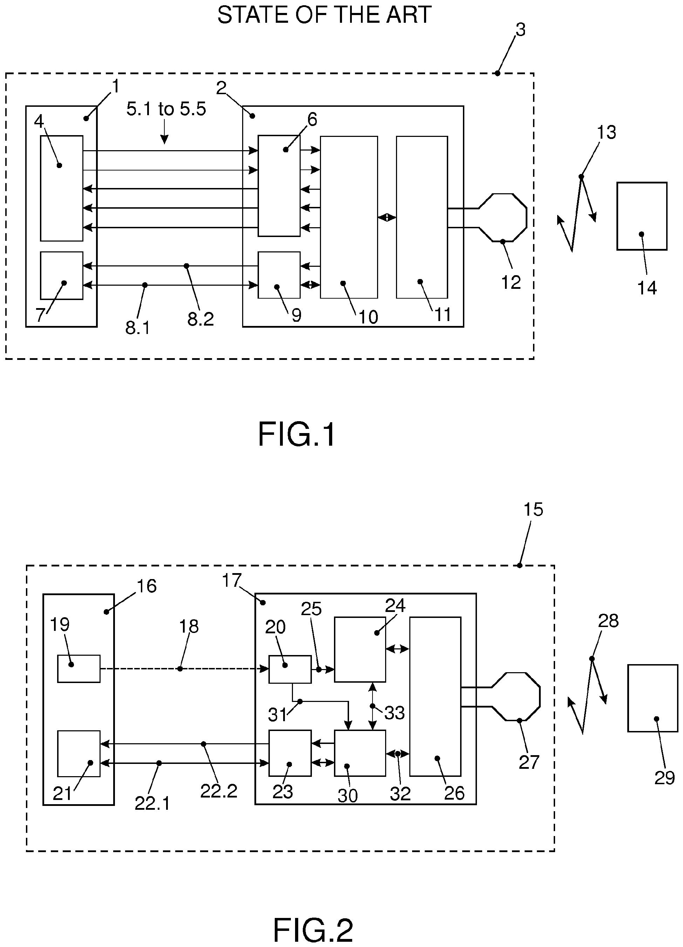

Such a system known to a man skilled in the art has been realized by a mobile phone or an infrastructure device for e.g. transportation or access control that comprises a contactless interface that complies with the ISO/IEC18092 Near Field Communication (NFC) Standard. The device host is realized as host processor 1 of the mobile phone and the controller circuit is realized by an NFC controller 2 of the type comparable, but not limited to e.g. the PN54x- or PN55x series of NFC controllers. A principle block diagram of this known system realized within the mobile phone 3 is shown in figure 1. A set of general purpose I/O lines 4 of host processor 1 is connected via five electrical connections 5.1 to 5.5 with a general purpose I/O 6 of NFC controller 2 to transmit a reset signal and a Wakeup_Request to NFC controller 2 and to transmit a Clock_Request and a Power_Request and a TX_Power_Request to host processor 1. A communication block 7 of host processor 1 is connected via two electrical connections 8.1 and 8.2 with a communication block 9 of NFC controller 2. An electrical connection may be realized by one or more physical connections. Electrical connection 8.1 would be realized with two physical connections (SDA, SCL) to enable an I2C bus between host processor 1 and NFC controller 2. For a UART electrical connection 8.1 would have at least two physical connections (TX, RX) and possibly some handshake lines (TRS, CTS,...) and for SPI electrical connection 8.1 would have four physical connections (NSS, SCK, MOIS, MISO). Electrical connection 8.1 is the IRQ line where NFC controller 2 alerts host processor 1 that data are ready to be fetched or received. Typically an NCI protocol defined in the NFC Forum Specification "NFC Controller Interface (NCI)" is used for this communication between host processor 1 and NFC controller 2. NFC controller 2 furthermore comprises an NFC processor 10, which is connected via eight electrical connections, equivalent to electrical connections 5.1. to 5.5 and 8.1 and 8.2, with general purpose I/O 6 and communication block 10. NFC processor 10 processes the information received over the contact interface from host processor 1 and transmits it to a front-end module 11 connected to an antenna 12 to send the information over a contactless interface 13 that complies with the NFC Standard to another NFC compliant device 14. Information received with antenna 12 from device 14 and processed by NFC controller 2 is transmitted over electrical connections 8.1 and 8.2 to host processor 1 to be used and processed within mobile phone 3. Such information for instance could be a payment or ticket information for e.g. public transportation or information needed for other NFC applications.

The known system comprises the disadvantage that RF settings within front-end module 11 may only be changed by NFC processor 10, but there is no possibility of a direct access by host processor 4 what makes fast adaptation of RF settings to the local environment difficult. Furthermore, there is a continuous need to reduce the power consumption of NFC controller 2.

### SUMMARY OF THE INVENTION

It is an object of the invention to provide a system of an antenna connected to an controller circuit that communicates information with a device host of the system over a contact interface that avoids above stated drawbacks.
This object is achieved with a system where the controller circuit comprises a controller processor and a hardware I/O controller, which are connected to a front-end module of the controller circuit to transmit/receive processed information to/from the antenna and , which controller processor is powered in a first mode of the controller circuit to process the information and which hardware I/O controller processes the information in a second mode of the controller circuit, when the power of the controller processor is low or down.

The controller circuit of the inventive system comprises the advantage of two different modes to enable different features needed. In the first mode, the processor of the controller circuit is powered and based on the installed firmware processes information received from the device host over the contact host interface and from another device received over the contactless interface or over one or more further contact interfaces of the controller circuit. In the second mode of the controller circuit the processor of the controller circuit is not powered or only powered with low power (sleep mode, power-down or suspend mode) that is not enough to be (fully) operational what reduces the power consumption of the controller circuit as the hardware I/O needs less power. The hardware I/O controller uses memory mapped registers in the front-end module and receives commands from device host via the communication blocks of the device host and the controller circuit. This enables the device host to directly change the content of registers in the front-end module, which comprises registers to change for instance RF settings for the contactless communication. This direct access is a major advantage compared to the state of the art, where a firmware or EEPROM file/record update of the software processed by the NFC processor is needed to change RF settings, which firmware or data update needs to be verified and involves effort and costs for state of the art systems. Contrary to that, the new system substantially increases the flexibility to implement new applications e.g. NFC applications, a patch, customer extension or experimental feature in a way quick and easy, just by amending the software of the device host. Logically verified software developed on the device host reduces costs of integration into and verification on the device.

It is furthermore advantageous to enable a third mode of the controller circuit, where both the controller processor and the hardware I/O controller are powered and process information. High level commands and protocol handling is processed by the controller processor while front-end settings may be changed by hardware commands to the hardware I/O what increases the processing speed and flexibility.

Furthermore, the number of e.g. seven electrical connections between host processor 1 and NFC Controller 2 is high and increases the costs of the state of the art system shown in figure 1. It is therefore advantageous that the contact interface of the inventive system comprises only three and in particular only two electrical connections between the device host and the controller circuit. The first connection of the two connections between the communication blocks of the device host and the controller circuit enables to transmit an IRQ together with data containing the reason for the request from the controller circuit to the device host to signal the device host the need to receive data, TX power or a clock signal or other actions over the contact interface what increases the flexibility and reduces the number or electrical connections. The second electrical connection, realized by two or more physical connections as stated above, is a communications connection to enable data transfer of information. Interfaces realized with these two electrical connections are for example: I2C (SDA, SCL) or UART (TX, RX) or SPI (MISO, MOSI, SCK, NSS), but others could be used as well. A third optional connection may be established between the general purpose I/Os of the device host and the controller circuit to enable the host device to reset the controller circuit. Alternatively, Reset can be applied by controlling the hardware I/O controller. Essentially, only the data interface plus an interrupt request IRQ is needed. The exact number of electrical connections may vary as the number of data interface lines is different for various interfaces.

It is furthermore advantageous that the device host is the master in the system and switches between the three modes of the integrated controller processor. This enables the device host to use the most efficient way of working in relation to electrical power consumption or processing power of the controller circuit for processing applications involving the contactless interface of the integrated controller processor.

These and other aspects of the invention will be apparent from and elucidated with reference to the embodiment described hereinafter. The person skilled in the art will understand that various embodiments may be combined.

### BRIEF DESCRIPTION OF THE DRAWINGS

Figures 1 shows a system of a host device and an controller circuit according to the state of the art.
Figure 2 shows a system of a host device and an controller circuit according to the invention.

### DETAILED DESCRIPTION OF EMBODIMENTS

Figure 2 shows some for the explanation of the invention relevant elements of a mobile phone 15 that comprises a contactless interface 28 that complies with the ISO/IEC18092 Near Field Communication (NFC) Standard. The device host is realized as host processor 16 of mobile phone 15 and the controller circuit is realized by an NFC controller 17. Both, host processor 16 and NFC controller 17 are integrated circuits with mobile phone 15, but in another embodiment of the invention could be realized as discrete or partly discrete elements or multiple integrated circuits as well. A general purpose I/O 19 of host processor 16 is connected via an optional electrical connection 18 with a general purpose I/O 20 of NFC controller 17 to transmit a reset signal to NFC controller 17. A communication block 21 of host processor 16 is connected via two electrical connections 22.1 and 22.2 with a communication block 23 of NFC controller 17 to enable an I2C bus between host processor 16 and NFC controller 17.Electrical connection 22.1 is an interface with two or more physical connections and electrical connection 22.2 is an IRQ-line. In this embodiment a NCI protocol defined in the NFC Forum Specification "NFC Controller Interface (NCI)" is used for this communication between host processor 16 and NFC controller 17. NFC controller 17 furthermore comprises an NFC processor 24, which is connected via only one electrical connection 25, equivalent to electrical connection 18, with general purpose I/O 20 to transmit the reset signal. NFC processor 24 processes the information received over the contact interface from host processor 16 and transmits it to a front-end module 26 connected to an antenna 27 to send the information over a contactless interface 28 that complies with the NFC Standard to another NFC compliant device 29. Information received with antenna 27 from device 29 and processed by NFC controller 17 is transmitted over electrical connections 22.1 and 22.2 to host processor 16 to be used and processed within mobile phone 15. Such information for instance could be a payment or ticket information for e.g. public transportation or information needed for other NFC applications.

NFC controller 17 may be switched by device host 16 into one of three different modes that will be explained below, but in another embodiment of the invention the NFC processor 24 may switch itself into a low-power mode. In a first mode NFC processor 24 is powered within the NFC controller 17 and processes information as explained above. The NFC controller 17 furthermore comprises a hardware I/O controller 30 that is connected with an electrical connection 31 to receive the reset signal from general purpose I/O 20. Hardware I/O controller 30 furthermore is connected with electrical connections equivalent to electrical connections 22.1 and 22.2 with communication block 23. In this first mode, device host 16 uses NFC processor 24 for all communications of information to and from the contactless interface 28 and protocol handling is processed by NFC processor 24 via electrical connection 33 and hardware I/O 30. If optional electrical connection 18 is not connected, electrical connections 25 and 31 are not used and reset signal is transmitted via electrical connections 22.1 and further via electrical connection 33 as a reset can be triggered via a command to hardware I/O controller 30 as well.

In the second mode device host 16 uses communication block 21 via connections 22 and communication block 23 to access hardware I/O controller 30, which has a direct connection 32 to front-end module 26. Via this connection, device host 16 may directly change RF settings of the front-end module 26 to improve or adapt the RF settings for a higher quality of information received and sent over contactless interface 28. Other settings or configurations could be changed as well directly by the device host 16 in the front-end module 26. This direct connection may be used for the communication of the information as well. In the second mode to save electrical power, the NFC processor 24 is not powered or in a power down mode with reduced functionality, but device host 16 may activate and deactivate NFC processor 24 via hardware I/O controller 30 what switches NFC controller 17 into its first mode. If both, NFC processor 24 and hardware I/O controller 30 are powered and active a third or mixed mode would be activated.

The inventive system of mobile phone 15 comprise the following advantages:
- Front-end module 26 may be operated by device host 16 without involvement of NFC processor 24.
- NFC processor 24 may be activated and deactivated by device host 16 via connections 22 allowing power control without the need of extra control lines. Device host 16 may activate and deactivate itself as well, what enables further advantageous embodiments of the invention. A auto-standby functionality of the NFC processor 24 or the firmware may be used as well.
- Mobile phone 15 via its device host 16 can be notified by an IRQ via connection 22.2 of a request for TX power or similar.
- Development of a new or adapted software or firmware for NFC processor 24 is easy as it may be developed on an external controller using the fast interface to directly access the hardware. At the end of the development process, the new software can be downloaded to NFC processor 24 and run without additional change.
- The reduced number of electrical connections of the contact interface between device host 16 and NFC controller 17 eases the integration of NFC controller 17 onto the PCB of mobile phone 15.
- Customer specific extensions may be added on device host 16 without the need to update and verify an amended NFC processor software or firmware.
- Direct control of front-end module 26 by device host 16 can be used to develop a patch, customer extension or experimental feature.

In another embodiment of the present invention, the system and in particular NFC controller 17 furthermore and in addition to what is shown in figure 2 comprises one or more further contact interfaces to process e.g. a single wire protocol for the communication of information via this contact interfaces to a device that comprises a contact interface.

Above embodiment of the invention was realized in a mobile phone, but the invention could be realized in readers, access control devices, payment terminals etc. in a simiar way.

## Claims

1. System (15) of an antenna (27) connected to a controller circuit (17) that communicates information with a device host (16) of the system (15) over a contact host interface (18, 22.1, 22.2) to transmit and receive information over a contactless interface (28) of the antenna (27), which system (15) is **characterized in that**
the controller circuit (17) comprises a controller processor (24) and a hardware I/O controller (30), which are connected to a front-end module (26) of the controller circuit (17) to transmit/receive processed information to/from the antenna (27) and , which controller processor (24) is powered in a first mode of the controller circuit (17) to process the information and
which hardware I/O controller (30) processes the information in a second mode of the controller circuit (17), when the power of the controller processor (24) is low or down.

2. System (15) according to claim 1, **characterized in that** in a third mode of the controller circuit (17), both the controller processor (24) and the hardware I/O controller (30) are powered and process information.

3. System (15) according to claim 1 or claim 2, **characterized in that** the contact host interface (18, 22.1, 22.2) between the device host (16) and the controller circuit (17) comprises only three electrical connections (18, 22.1, 22.2) and in particular only two electrical connections (22.1, 22.2).

4. System (15) according to claim 3, **characterized in that** the device host (16) activates one of the three modes of the controller circuit (17) over the contact host interface (18, 22.1, 22,2).

5. System (15) according to claim 3, **characterized in that** the controller processor (24) selects the power mode itself and communicates the setting to the device host (16) over the contact host interface (18, 22.1, 22,2).

6. System (15) according to one of the claims 1 to 5, **characterized in that** the device host (16) in the second mode of the controller circuit (17) over the contact host interface (18, 22.1, 22.2) directly changes RF settings in the front-end module (26).

7. System (15) according to one of the claims 1 to 6, **characterized in that** the controller circuit (17) over the contact host interface (18, 21.2, 22.2) sends an interrupt request together with data containing the reason for the request to the device host (16) to signal the need to receive TX power or a clock signal or other actions over the contact host interface (18, 22.1, 22.2).

8. System according to one of the claims 1 to 7, **characterized in that** the controller circuit realizes a Near Field Communication Controller to receive and transmit information that complies with the Near Filed Communication Standard.
